# EUROPÄISCHE PATENTSCHRIFT

(11) **EP 2 886 931 B1**
(45) Veröffentlichungstag und Bekanntmachung des Hinweises auf die Patenterteilung: **24.06.2020**
(21) Anmeldenummer: 14196987.3
(22) Anmeldetag: 09.12.2014
(51) Int. Cl.: F16N 7/32

(54) **Vorrichtung eines Strahltriebwerks mit wenigstens einem in einem Gehäuse angeordneten und gegenüber dem Gehäuse drehbar ausgeführten Bauteil**
Device of a jet engine with at least one component in a housing which can be rotated relative to the housing
Dispositif d'un moteur à réaction doté d'au moins un élément rotatif par rapport au boîtier et disposé dans un boîtier

(30) Priorität: 20.12.2013 DE 102013114638
(43) Veröffentlichungstag der Anmeldung: 24.06.2015
(73) Patentinhaber: Rolls-Royce Deutschland Ltd & Co KG, 15827 Blankenfelde-Mahlow (DE)
(72) Erfinder: Beier, Jürgen, 15827 Blankenfelde-Mahlow (DE)
(74) Vertreter: Kronthaler, Wolfgang N.K.

(56) Entgegenhaltungen:
- EP-A1- 0 780 546
- EP-A1- 2 559 869
- DE-A1- 3 605 619
- DE-A1-102006 058 343
- DE-T2- 60 308 574
- DE-T2- 69 605 014
- GB-A- 2 135 740
- US-A- 4 525 995
- US-A1- 2005 211 093

## Beschreibung

Die Erfindung betrifft eine Vorrichtung eines Strahltriebwerks mit wenigstens einem in einem Gehäuse angeordneten und gegenüber dem Gehäuse drehbar ausgeführten Bauteil gemäß der im Oberbegriff des Patentanspruches 1 näher definierten Art.

Bei aus der Praxis bekannten Strahltriebwerken wird im Betrieb ölhaltige Verbrauchsluft aus Lagerkammern und aus einem Öltank über separate Leitungen einer Einrichtung zum Abscheiden von Öl aus einem Luft-Öl-Volumenstrom zugeführt, die als Ölabscheider, vorzugsweise als Zentrifugalölabscheider ausgeführt sein kann und auch als Breather bezeichnet wird. Die Separierung großer Ölpartikel aus der Verbrauchsluft bzw. den Luft-Öl-Volumenströmen aus den Lagerkammern und dem Öltank erfolgt über einen im Bereich des Breathers vorgesehenen und als Zentrifuge wirkenden Umlenkbereich. Ölpartikel mit kleineren Durchmessern werden durch einen im Ölabscheider angeordneten Metallschaum aufgefangen und so ebenfalls aus der Luft gefiltert. Das mittels dieser Vorgehensweise abgeschiedene Öl wird dem Ölkreislauf eines Strahltriebwerks wieder zugeführt. Die gereinigte Luft wird an die Umwelt eines Strahltriebwerkes abgegeben.

Die dem Breather bzw. dem Zentrifugalölabscheider zugeführten Luft-Öl-Volumenströme sind stark ölhaltig und hoch temperiert. Dadurch sind in den Luft-Öl-Volumenströmen auch sehr feine Ölpartikel vorhanden. Diese werden aufgrund ihrer geringen Größe nur ungenügend mittels der Zentrifuge separiert und nur unzureichend durch den in der Zentrifuge befindlichen Metallschaum aufgefangen. Dadurch gelangen sie über einen Auslass des Ölabscheiders für den Luftstrom in Form eines feinen Nebels aus dem Triebwerk in die Umwelt. Diese hohen Ölverluste begründen maßgeblich den durchschnittlichen Ölverbrauch heutiger Triebwerke.

Zusätzlich treten im Bereich solcher Breather unerwünscht hohe Druckverluste auf, die die Abscheideleistung von Öl aus einem durch den Breather geführten Luft-Öl-Volumenstrom zusätzlich beeinträchtigen.

Ein Gasturbinenölabscheider mit einem Gehäuse ist aus der DE 10 2006 058 343 A1 bekannt, wobei das Gehäuse mit einem Einlass versehen ist. In dem Gehäuse ist ein in Rotation versetzbares Filterelement angeordnet, das mit einem Luftablass stromab des Filterelements versehen ist. Des Weiteren umfasst das Gehäuse zumindest einen Ölablass. Stromauf des Filterelements sind Mittel zum Aufbringen von elektrostatischen Kräften angeordnet, um die Neigung von Öltropfen, sich mit einem Ölfilm im Filterelement zu verbinden, zu erhöhen und eine Abscheideleistung im Bereich des Gasturbinenölabscheiders zu verbessern.

Eine Temperatur eines in solche Gasturbinenölabscheider, die auch als Breather bezeichnet werden, eingeleiteten Luft-Öl-Volumenstromes ist unter Umständen nachteilhafterweise sehr hoch. Das aus dem Stand der Technik bekannte elektrostatische Aufladen eines Luft-Öl-Gemisches ist nur bedingt zur Verbesserung einer Abscheideleistung im Bereich eines Gasturbinenölabscheiders geeignet, da das im Luft-Öl-Volumenstrom gasförmig vorliegende Öl durch die bekannte Vorgehensweise nicht in gewünschtem Umfang aus dem Luft-Öl-Volumenstrom abscheidbar ist.

Darüber hinaus ist aus der US 4,525,995 eine Gasturbinenmaschine bekannt, bei der mehrere Lagereinrichtungen der Maschine in Lagerkammern angeordnet sind. Öl wird aus den Lagerkammern von die Lagerkammern durchströmender Luft abgesaugt, womit Luft-Öl-Volumenströme aus den Lagerkammern in Richtung eines Ölabscheiders geführt werden, der im Bereich einer Nebenaggregategetriebeeinrichtung vorgesehen ist. Im Bereich des Ölabscheiders wird das Öl aus den Luft-Öl-Volumenströmen abgetrennt und die Luft in Richtung eines Niederdruckbereiches der Maschine abgeführt, während das abgetrennte Öl in Richtung eines Einlasses einer Absaugpumpe geleitet wird. Die jeweils von den Lagerkammern in

Richtung des Ölabscheiders geführten Luft-Öl-Volumenströme werden in vom Innenraum der Nebenaggregategetriebeeinrichtung abgetrennte Bereiche am Innenraum vorbei direkt in den Ölabscheider mit unter Umständen ebenfalls hoher Temperatur eingeleitet, weshalb das in dem dem Ölabscheider zugeführten Luft-Öl-Volumenstrom gasförmig vorliegende Öl ebenfalls nicht in gewünschtem Umfang aus dem Luft-Öl-Volumenstrom im Bereich des Ölabscheiders abscheidbar ist.

Aus der EP 0 780 546 A1 ist ein Turbotriebwerk mit einem Gehäuse bekannt, von dem ein Raum begrenzt ist. In dem Raum ist ein gegenüber einem äußeren Bereich des Gehäuses drehbar gelagerter Ölabscheider angeordnet.

Eine Gasturbine, bei dem eine als Hohlwelle ausgeführte Hauptwelle über ein Lager gegenüber einer ein Gehäuse darstellenden Lagerkammer gelagert ist, ist aus der DE 36 05 619 A1 bekannt. Im Inneren der Hauptwelle ist ein Ölabscheider angeordnet, dem über in radialer Richtung verlaufende Bohrungen in einer Wand der Hauptwelle ein Luft-Öl-Gemisch aus einem von der Lagerkammer und der Wand der Hauptwelle begrenzten Raum zuführbar ist. In den Raum wird über eine Öldüse Öl eingeleitet.

In der Druckschrift GB 2 135 740 A ist ein Schmiersystem für ein Gasturbinentriebwerk beschrieben, wobei eine Antriebswelle vorgesehen ist, an der umfangsseitig ein Abscheider angeordnet ist. Dem Abscheider wird über Düsen aus einer Lagerkammer ein Luft-Öl-Gemisch zugeführt.

Der vorliegenden Erfindung liegt die Aufgabe zugrunde, eine Vorrichtung zur Verfügung zu stellen, mit welcher auf konstruktiv einfache und kostengünstige Art und Weise ein Ölgehalt eines aus einem Strahltriebwerk an die Umgebung abgegebenen Luftvolumenstromes möglichst gering einstellbar ist.

Erfindungsgemäß wird diese Aufgabe mit einer Vorrichtung mit den Merkmalen des Patentanspruches 1 gelöst.

Die erfindungsgemäße Vorrichtung eines Strahltriebwerks umfasst wenigstens ein in einem Gehäuse angeordnetes und gegenüber dem Gehäuse drehbar ausgeführtes Bauteil. Wenigstens ein Luft-Öl-Volumenstrom ist aus einem Bereich des Strahltriebwerks in das Gehäuse führbar.

Erfindungsgemäß ist der Luft-Öl-Volumenstrom über eine Einleiteinrichtung wenigstens annähernd tangential zu einem zumindest zu einem äußeren Umfangsbereich nahen Bereich des drehbaren Bauteils in das Gehäuse einleitbar, wobei zumindest im Bereich des drehbaren Bauteils über eine Einrichtung Öl in den Luft-Öl-Volumenstrom einsprühbar ist.

Bei der erfindungsgemäßen Vorrichtung wird der tangential zu dem vorzugsweise schnelldrehenden Bauteil in das Gehäuse eingeleitete Luft-Öl-Volumenstrom durch die Drehbewegung des Bauteiles im Bereich des Bauteiles beschleunigt und strömt eine benachbarte Innenwand des Gehäuses der Vorrichtung an. Durch die Anströmung der Gehäuseinnenwand wird eine Abscheidung von im Luft-Öl-Volumenstrom enthaltenen Öltröpfchen, deren Abscheideaffinität an einer Gehäuseinnenwand der Vorrichtung aufgrund ihrer Tröpfchengröße eher gering ist, an der Innenwand des Gehäuses der Vorrichtung in einem für eine gewünscht hohe Abscheideleistung erforderlichen Umfang begünstigt bzw. unterstützt. Dieser Effekt wird besonders dann erzielt, wenn der Luft-Öl-Volumenstrom in Bezug auf das rotierende Bauteil der Vorrichtung so eingeleitet wird, dass der Luft-Öl-Volumenstrom in größtmöglichem Umfang vom rotierenden Bauteil in Richtung der Innenwand des Gehäuses mit entsprechender Geschwindigkeit geführt wird.

Die erfindungsgemäße Vorrichtung kann beispielsweise als Nebenaggregategetriebeeinrichtung eines Strahltriebwerkes ausgeführt sein, das mit einem Gehäuse und einer im Gehäuse drehbar gelagerten Getriebewelle ausgebildet ist, auf der als drehbares Bauteil wenigstens ein Zahnrad angeordnet ist. Dann ist es vorteilhaft, wenn der Luft-Öl-Volumenstrom tangential zum äußeren Umfangsbereich des Zahnrades, in dem die Verzahnung vorliegt, in das Gehäuse eingeleitet und von den bewegten Zähnen beschleunigt wird.

Dadurch, dass im Bereich der Vorrichtung eine Einrichtung zum Einsprühen von Öl in den Luft-Öl-Volumenstrom vorgesehen ist, über die vorzugsweise ein definierter Ölsprühstrahl direkt in den Luft-Öl-Volumenstrom im Bereich des drehbaren Bauteiles in der Vorrichtung einbringbar ist, werden sowohl die Öltröpfchen des Luft-Öl-Volumenstromes als auch die in den Luft-Öl-Volumenstrom eingesprühten Öltröpfchen vom drehbaren Bauteil beschleunigt. Neben der verbesserten Abscheidung von Öl aus dem Luft-Öl-Volumenstrom begünstigt das drehende Bauteil zusätzlich einen gewünscht hohen Vermischungsgrad zwischen dem in den Innenraum des Gehäuses der erfindungsgemäßen Vorrichtung tangential zum drehbaren Bauteil eingeleiteten Luft-Öl-Volumenstrom und dem in diesen eingesprühten Öl.

Beim Aufeinandertreffen von eingesprühten Öltröpfchen auf bereits im Luft-Öl-Volumenstrom vorhandene Öltröpfchen vereinigen sich die eingesprühten Öltropfen und die bereits vorhandenen Öltröpfchen aufgrund ihrer Anziehungskräfte zu gewünscht größeren Öltropfen, die im weiteren Strömungsweg des Luft-Öl-Volumenstromes mit geringerem Aufwand als Ölpartikel mit kleinerem Durchmesser aus der Luft mechanisch abscheidbar sind. Dieser Effekt wird durch die bauteilseitige Beschleunigung des Luft-Öl-Volumenstromes und die hohe Vermischung des Luft-Öl-Volumenstromes mit dem eingesprühten Öl noch weiter verbessert.

Zusätzlich ist durch das Einsprühen von Öl in den Luft-Öl-Volumenstrom auch eine Temperatur des Luft-Öl-Volumenstromes im Gehäuse der erfindungsgemäßen Vorrichtung bei entsprechender Temperaturdifferenz zwischen dem Öl und dem Luft-Öl-Volumenstrom reduzierbar. Bei entsprechender Abkühlung des Luft-Öl-Volumenstromes wird die gewünschte Vergrößerung der Ölpartikeldurchmesser im Luft-Öl-Volumenstrom zusätzlich begünstigt, da durch die Temperaturabsenkung im Luft-Öl-Volumenstrom gasförmiges Öl kondensiert und zu einem Anstieg der Tropfendurchmesser der im Bereich des Luft-Öl-Volumenstromes vorliegenden Ölpartikel führt.

Die Abscheidung von im Luft-Öl-Volumenstrom enthaltenen Öltröpfchen an einer Innenwand des Gehäuses der Vorrichtung und eine Vermischung des Luft-Öl-Volumenstromes und des eingesprühten Öles stellt sich auf konstruktiv einfache Art und Weise in gewünschtem Umfang ein, wenn dem Luft-Öl-Volumenstrom im Bereich der Einleiteinrichtung eine im Wesentlichen der Drehbewegung des drehbaren Bauteils wenigstens annähernd entsprechende Strömungsrichtung aufprägbar ist.

In Abhängigkeit des jeweils vorliegenden Anwendungsfalles ist dem Luft-Öl-Volumenstrom im Bereich der Einleiteinrichtung auch eine im Wesentlichen der Drehbewegung des drehbaren Bauteils wenigstens annähernd entgegengesetzte Strömungsrichtung aufprägbar.

Ist dem aus der Einrichtung in den Luft-Öl-Volumenstrom einsprühbaren Öl im Bereich der Einrichtung eine Strömungsrichtung aufprägbar, die mit der Hauptströmungsrichtung des Luft-Öl-Volumenstromes vorzugsweise im Bereich des drehbaren Bauteils einen spitzen Winkel und/oder einen stumpfen Winkel einschließt, ist die Abscheideleistung von Öl aus dem Luft-Öl-Volumenstrom im Bereich der Innenwand des Gehäuses der Vorrichtung und vorzugsweise im Bereich eines Ölabscheiders mit geringem konstruktivem Aufwand verbesserbar.

Ist die Einrichtung mit einer Düseneinrichtung ausgebildet ist, in deren Bereich das in den Luft-Öl-Volumenstrom einzusprühende Öl vorzugsweise vernebelbar ist, ist das Öl mit eine hohe Abscheideleistung begünstigenden Tröpfchendurchmessern in den Luft-Öl-Volumenstrom einleitbar bzw. einsprühbar.

Eine weitere Ausführungform der erfindungsgemäßen Vorrichtung umfasst eine Einrichtung zum Abscheiden von Öl, beispielsweise einen Ölabscheider, aus einem Luft-Öl-Volumenstrom, die ein Abscheidergehäuse aufweist, das mit einem Einlassbereich des Luft-Öl-Volumenstroms, mit einem Auslassbereich für Luft und mit einem Auslassbereich für aus dem Luft-Öl-Volumenstrom abgeschiedenem Öl ausgebildet ist.

Bei einer Weiterbildung der Vorrichtung nach der Erfindung sind im Einlassbereich im Wesentlichen in radialer Richtung verlaufende und um eine senkrecht zu einer Querschnittsebene des Einlassbereiches stehende Drehachse drehbare Schaufeln angeordnet, die einen in Bezug auf den Einlassbereich stromab der Schaufeln angeordneten Bereich im Inneren des Gehäuses in rotierendem Zustand bedrucken.

Damit ist die erfindungsgemäße Vorrichtung im Bereich der Einrichtung zum Abscheiden von Öl zur Kompensation von Druckverlusten über dem Strömungsweg des Luft-Öl-Volumenstromes zwischen dem Einlassbereich für den Luft-Öl-Volumenstrom und dem Auslassbereich für Luft mit einer Art Propellerpumpe im Eingangsbereich bzw. im Einlassbereich der Einrichtung ausgeführt, mittels der ölhaltige Verbrauchsluft in das Innere des Abscheidergehäuses der Einrichtung befördert wird und mittels der eine Abscheideleistung von Öl aus dem durch die Einrichtung geführten Luft-Öl-Volumenstrom aus dem Innenraum der Vorrichtung auf konstruktiv einfache und bauraumgünstige Art und Weise verbessert ist.

Bilden die Schaufeln wenigstens annähernd ein Flügelrad aus, ist die Bedruckung des Bereiches im Inneren des Abscheidergehäuses stromab der Schaufeln auf konstruktiv einfache Art und Weise mit einem günstigen Verhältnis zwischen einem Bauteilgewicht und einer Bauteilfestigkeit durchführbar.

Die Schaufeln sind bei einer ebenfalls konstruktiv einfachen und mit einer gewünscht hohen Festigkeit herstellbaren Ausführungsform der erfindungsgemäßen Vorrichtung einenends in einem inneren Durchmesserbereich des Abscheidergehäuses mit einem Nabenbereich und anderenends in einem äußeren Durchmesserbereich des Abscheidergehäuses mit dem Abscheidergehäuse verbunden, wobei sowohl der Nabenbereich als auch das Abscheidergehäuse gemeinsam mit den Schaufeln in Rotation versetzbar sind.

Im Bereich der Einrichtung zum Abscheiden von Öl aus dem Luft-Öl-Volumenstrom abgeschiedenes Öl ist mit geringem konstruktivem Aufwand aus der Einrichtung ausleitbar, wenn der Auslassbereich für das aus dem Luft-Öl-Volumenstrom abgeschiedene Öl in einem radial äußeren Bereich des Abscheidergehäuses der Einrichtung vorgesehene Bohrungen aufweist. Das abgeschiedene Öl ist dann über die während der Rotation des Abscheidergehäuses wirkende Zentrifugalkraft auf einfache Art und Weise aus dem Inneren des Abscheidergehäuses radial nach außen über die Bohrungen aus dem Innenraum der Einrichtung zum Abscheiden von Öl ohne weitere Maßnahmen abführbar.

In Abhängigkeit des jeweils vorliegenden Anwendungsfalles besteht auch die Möglichkeit, die Vorrichtung mit aus der DE 10 2006 058 343 A1 bekannten Mitteln zum Aufbringen elektrostatischer Kräfte auszuführen, um die Abscheideleistung der Vorrichtung bzw. des Ölabscheiders weiter zu verbessern.

Bei einer vorteilhaften Ausführungsform der Vorrichtung bzw. der Nebenaggregategetriebeeinrichtung ist die Einrichtung zum Abscheiden von Öl wenigstens teilweise innerhalb und/oder außerhalb des Gehäuses angeordnet, wobei die Anordnung der Einrichtung zum Abscheiden von Öl innerhalb des Gehäuses der Vorrichtung bzw. der Nebenaggregategetriebeeinrichtung einen zusätzlichen Schutz der Einrichtung darstellt, während eine Anordnung der Einrichtung außerhalb des Gehäuses der Vorrichtung bzw. der Nebenaggregategetriebeeinrichtung konstruktive Änderungen im Bereich des Gehäuses der Vorrichtung bzw. einer herkömmlichen Nebenaggregategetriebeeinrichtung unter Umständen nicht erforderlich macht.

Bei einer besonders bauraumgünstigen Ausführungsform der Vorrichtung bzw. der Nebenaggregategetriebeeinrichtung ist die Einrichtung zum Abscheiden von Öl auf einer Welle bzw. auf einer Getriebewelle angeordnet und vorzugsweise in ein auf der Getriebewelle angeordnetes Zahnrad integriert. Dann sind das Abscheidergehäuse und die Schaufeln und vorzugsweise der poröse Bereich der Einrichtung zum Abscheiden von Öl direkt von der Welle in gewünschtem Umfang rotatorisch antreibbar. In Abhängigkeit des jeweils vorliegenden Anwendungsfalles besteht jedoch auch die Möglichkeit, zwischen dem Abscheidergehäuse und den Schaufeln und vorzugsweise dem porösen Bereich und der Welle bzw. der Getriebewelle eine entsprechende Übersetzung vorzusehen, um das Abscheidergehäuse und die Schaufeln und vorzugsweise den porösen Bereich der Einrichtung zum Abscheiden von Öl mit einer von der Drehzahl der Welle bzw. der Getriebewelle abweichenden Drehzahl rotieren zu lassen.

Der Auslassbereich für Luft der Einrichtung zum Abscheiden von Öl umfasst bei einer besonders bauraumgünstigen Ausführungsform der Vorrichtung bzw. der Nebenaggregategetriebeeinrichtung wenigstens eine durch die als Hohlwelle ausgebildete Welle bzw. Getriebewelle führende Durchlassöffnung, womit die im Bereich der Einrichtung zum Abscheiden von Öl gereinigte Luft ohne zusätzliche Maßnahmen aus der Einrichtung ausführbar ist.

Im Bereich der Einrichtung zum Abscheiden von Öl aus dem Luft-Öl-Volumenstrom abgeschiedenes Öl ist ebenfalls mit geringem konstruktivem Aufwand aus der Einrichtung zum Abscheiden von Öl in den Innenraum der erfindungsgemäßen Vorrichtung bzw. der Nebenaggregategetriebeeinrichtung ausleitbar, wenn die Bohrungen des Auslassbereiches für das aus dem Luft-Öl-Volumenstrom abgeschiedene Öl den Innenraum der Einrichtung zum Abscheiden von Öl mit dem Innenraum des Gehäuses der Vorrichtung bzw. der Nebenaggregategetriebeeinrichtung verbinden.

Bei einer mit hoher Abscheideleistung betreibbaren Ausführungsform der Einrichtung zum Abscheiden von Öl der erfindungsgemäßen Vorrichtung ist diese im Abscheidergehäuse stromab der Schaufeln mit einem in Rotation versetzbaren porösen Bereich ausgebildet, der im Strömungsweg des Luft-Öl-Volumenstromes angeordnet ist und vom Luft-Öl-Volumenstrom durchströmbar ist.

Stromauf des porösen Bereiches ist bei einer konstruktiv einfachen Ausführungsform der Einrichtung zum Abscheiden von Öl der erfindungsgemäßen Vorrichtung ein Umlenkbereich im Strömungsweg des Luft-Öl-Volumenstromes vorgesehen, in dessen Bereich zumindest ein Teil des Öls aus dem Luft-Öl-Volumenstrom aufgrund der wirkenden Zentrifugalkraft abscheidbar ist. Damit sind größere Ölpartikel bzw. Öltröpfchen aus dem Luft-Öl-Volumenstrom auch bereits vor Eintritt in den porösen Bereich der Einrichtung auf konstruktiv einfache Art und Weise abscheidbar und ein Strömungswiderstand ist im porösen Bereich der Einrichtung aufgrund einer zu hohen Beladung mit Öl auf ein definiertes Niveau begrenzbar.

Dadurch, dass die Vorrichtung bzw. die Nebenaggregategetriebeeinrichtung mit der vorstehend näher beschriebenen Einrichtung zum Abscheiden von Öl ausgeführt ist, ist aus einem aus der Vorrichtung bzw. der Nebenaggregategetriebeeinrichtung zu führenden und mit Öl beladenen Luft-Öl-Volumenstrom das Öl auf einfache Art und Weise in gewünschtem Umfang abscheidbar.

Die Abscheideleistung im Bereich der Einrichtung zum Abscheiden von Öl ist im Vergleich zu aus dem Stand der Technik bekannten Lösungen auf konstruktiv einfache Art und Weise zusätzlich dadurch erhöht, dass der Luft-Öl-Volumenstrom aus einem Innenraum des Gehäuses der Vorrichtung bzw. der Nebenaggregategetriebeeinrichtung, in dem vorzugsweise über einen Schmier- und Kühlkreislauf rotierende Bauteile, wie Zahnräder, Lagereinrichtungen und dergleichen mit Schmier- und Kühlöl beaufschlagbar sind, mit einer für eine hohe Abscheideleistung günstigen Betriebstemperatur in die Einrichtung einleitbar ist und die Luft über den Luftauslass vorzugsweise in Richtung der Umgebung der Vorrichtung bzw. der Nebenaggregategetriebeeinrichtung und das Öl über den Ölauslass aus der Einrichtung vorzugsweise wieder zurück in die Nebenaggregategetriebeeinrichtung abführbar sind. Dabei besteht die Möglichkeit, die gereinigte Luft stromab der Einrichtung zum Abscheiden von Öl bzw. des Ölabscheiders an die Umgebung des Strahltriebwerks oder einen Triebwerkskern- oder Bypassstrom auszuleiten, während das abgeschiedene Öl in einen Ölkreislauf des Strahltriebwerks zurückgeleitet wird.

Ein Ölgehalt eines aus einem Strahltriebwerk an die Umgebung abgegebenen Luft-Öl-Volumenstromes ist mit geringem Aufwand möglichst niedrig, wenn das Strahltriebwerk mit einer vorstehend näher beschriebenen erfindungsgemäßen Vorrichtung bzw. einer solchen Nebenaggregategetriebeeinrichtung ausgebildet ist.

Bei einer vorteilhaften Ausführung eines Strahltriebwerkes stehen mehrere mit Öl beaufschlagte Bereiche über den Innenraum des Gehäuses der Vorrichtung bzw. der Nebenaggregategetriebeeinrichtung mit der Einrichtung zum Abscheiden von Öl in Wirkverbindung. Dadurch wird insbesondere die Abscheideleistung im Bereich der Einrichtung im Vergleich zu aus dem Stand der Technik bekannten Lösungen auf konstruktiv einfache Art und Weise erhöht. Dies resultiert aus der Tatsache, dass der Luft-Öl-Volumenstrom aus dem mit Öl beaufschlagten Bereich über den Innenraum, in dem vorzugsweise über einen Schmier- und Kühlkreislauf rotierende Bauteile, wie Zahnräder, Lagereinrichtungen und dergleichen mit Schmier- und Kühlöl beaufschlagbar sind, des Gehäuses der Nebenaggregategetriebeeinrichtung in die Einrichtung zum Abscheiden von Öl einleitbar ist und die Luft über den Luftauslass und das Öl über den Ölauslass aus der Einrichtung zum Abscheiden von Öl abführbar sind.

Durch das Einleiten des Luft-Öl-Volumenstromes aus dem mit Öl beaufschlagten Bereich des Strahltriebwerkes in den Innenraum des Gehäuses der Vorrichtung bzw. der Nebenaggregategetriebeeinrichtung ist eine Temperatur des Luft-Öl-Volumenstromes bei entsprechender Temperaturdifferenz zwischen dem Innenraum des Gehäuses der Vorrichtung bzw. der Nebenaggregategetriebeeinrichtung und dem Luft-Öl-Volumenstrom auf einfache Art und Weise reduzierbar. Bei entsprechender Abkühlung des Luft-Öl-Volumenstromes kondensiert im Luft-Öl-Volumenstrom gasförmig vorliegendes Öl, was eine Vergrößerung von Tropfendurchmessern der im Bereich des Luft-Öl-Volumenstromes vorliegenden Ölpartikel begünstigt. Zusätzlich vereinigen sich die im Luft-Öl-Volumenstrom vorhandenen Öltröpfchen beim Aufeinandertreffen auf bereits im Innenraum des Gehäuses der der Vorrichtung bzw. der Nebenaggregategetriebeeinrichtung vorhandene Öltröpfchen aufgrund vorliegender Anziehungskräfte zu gewünscht größeren Tropfen, die im weiteren Strömungsweg des Luft-Öl-Volumenstromes mit geringerem Aufwand als Ölpartikel mit kleinerem Durchmesser aus der Luft mechanisch abscheidbar sind. Anschließend besteht die Möglichkeit, die gereinigte Luft stromab der Vorrichtung an die Umgebung des Strahltriebwerks oder einen Triebwerkskern- oder Bypassstrom auszuleiten, während das abgeschiedene Öl über den Ölauslass der Einrichtung zum Abscheiden von Öl in den Innenraum der Vorrichtung bzw. der Nebenaggregategetriebeeinrichtung und von dort vorzugsweise in einen Ölkreislauf des Strahltriebwerks zurückleitbar ist.

Die durch das Einleiten des Luft-Öl-Volumenstromes aus dem wenigstens einen mit Öl beaufschlagten Bereich in den Innenraum des Gehäuses der Vorrichtung bzw. der Nebenaggregategetriebeeinrichtung bewirkte vorbeschriebene Vergrößerung der Tropfendurchmesser führt auch zu einer Verbesserung der Abscheideleistung im porösen Bereich der Einrichtung zum Abscheiden von Öl, in dem das im Luft-Öl-Volumenstrom vorhandene Öl einerseits wie im Bereich eines Prallfilters und andererseits wie im Bereich einer Zentrifuge aus dem Luft-Öl-Volumenstrom abgeschieden wird. Die im Bereich des Innenraums des Gehäuses der Vorrichtung bzw. der Nebenaggregategetriebeeinrichtung vergrößerten Ölpartikel des Luft-Öl-Volumenstromes können im porösen Bereich, der vorzugsweise als Metallschaum oder dergleichen ausgeführt sein kann, mit geringerem Aufwand effizienter separiert werden. Dadurch werden über die Abluft eines Strahltriebwerkes auftretende Ölverluste durch die verringerten Emissionen vermindert.

Ein mit Öl beaufschlagter Bereich ist bei einer weiteren vorteilhaften Ausführungsform des Strahltriebwerkes eine Lagerkammer und/oder ein Öltank, womit aus diesen Bereichen durch einen Luftstrom ausgetragenes Öl in vorbeschriebenem Umfang mit hoher Abscheideleistung aus dem Luftstrom abscheidbar und mit geringem Aufwand in einen Ölkreislauf eines Strahltriebwerkes zurückführbar ist.

Sowohl die in den Patentansprüchen angegebenen Merkmale als auch die in den nachfolgenden Ausführungsbeispielen der erfindungsgemäßen Vorrichtung, der erfindungsgemäßen Nebenaggregategetriebeeinrichtung und des erfindungsgemäßen Strahltriebwerks angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung der, sondern weisen im Wesentlichen lediglich bespielhaften Charakter auf.

Weitere Vorteile und vorteilhafte Ausführungsformen der erfindungsgemäßen Vorrichtung, der erfindungsgemäßen Nebenaggregategetriebeeinrichtung und des erfindungsgemäßen Strahltriebwerkes ergeben sich aus den Patentansprüchen und den nachfolgend unter Bezugnahme auf die Zeichnung prinzipmäßig beschriebenen Ausführungsbeispielen, wobei zugunsten der Übersichtlichkeit jeweils für bau- und funktionsgleiche Bauteile dieselben Bezugszeichen verwendet werden.

Es zeigt:
- Fig. 1a: eine stark schematisierte Längsschnittansicht eines Strahltriebwerkes mit einer im Bläsergehäuse angeordneten Nebenaggregategetriebeeinrichtung;
- Fig. 1b: eine Fig. 1a entsprechende Darstellung eines Strahltriebwerkes mit im Bereich der Triebwerkskerns montierter Nebenaggregategetriebeeinrichtung;
- Fig. 2: eine stark schematisierte Darstellung eines Teilbereiches des Strahltriebwerkes gemäß Fig. 1a bzw. Fig. 1b, der die Nebenaggregategetriebeeinrichtung mit einer Ausführungsform der erfindungsgemäßen Vorrichtung umfasst;
- Fig. 3: eine vergrößerte Darstellung eines Bereiches der Nebenaggregategetriebeeinrichtung gemäß Fig. 2;
- Fig. 4: eine schematisierte dreidimensionale Einzeldarstellung eines Einlassbereiches der Vorrichtung gemäß Fig. 2 und Fig. 3;
- Fig. 5: eine Querschnittansicht eines Bereiches des Strahltriebwerkes gemäß Fig. 1a bzw. Fig. 1b entlang einer in Fig. 4 gezeigten Schnittlinie V-V durch die Nebenaggregategetriebeeinrichtung;
- Fig. 6: eine vergrößerte Ansicht eines in Fig. 5 näher gekennzeichneten Bereiches VI; und
- Fig. 7: eine Fig. 6 entsprechende Darstellung einer weiteren Ausführungsform der erfindungsgemäßen Vorrichtung.

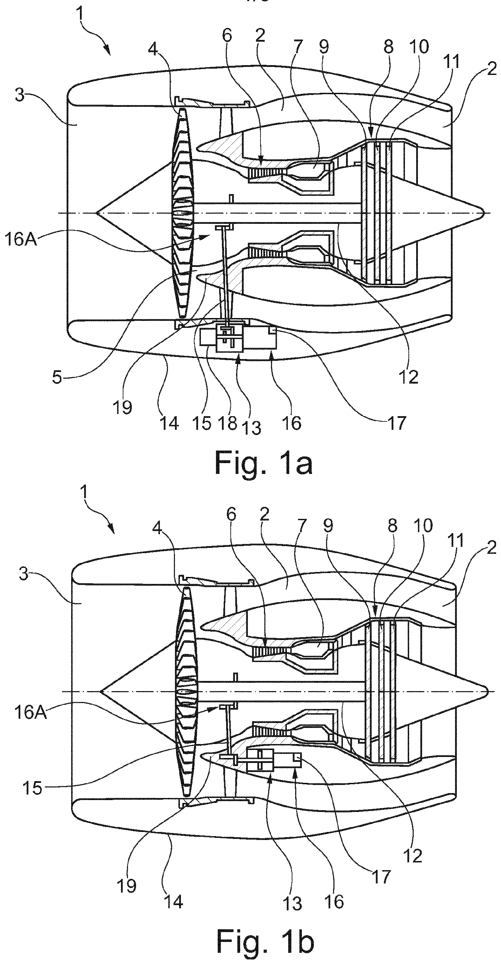

In Fig. 1a und 1b ist jeweils ein Strahltriebwerk 1 in einer Längsschnittansicht gezeigt. Das Strahltriebwerk 1 ist mit einem Nebenstromkanal 2 und einem Einlaufbereich 3 ausgebildet, wobei sich an den Einlaufbereich 3 stromab ein Bläser 4 in an sich bekannter Art und Weise anschließt. Wiederum stromab des Bläsers 4 teilt sich der Fluidstrom im Strahltriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7 und einer Turbineneinrichtung 8 ausgeführt ist.

Die Turbineneinrichtung 8 weist vorliegend drei Rotorvorrichtungen 9, 10 und 11 auf, welche mit im Wesentlichen vergleichbarer Bauweise ausgebildet sind und mit einer Triebwerksachse 12 verbunden sind.

Bei der Ausführung des Strahltriebwerks 1 gemäß Fig. 1a ist eine vorliegend als Nebenaggregategetriebeeinrichtung ausgeführte Vorrichtung 13 in einem äußeren Triebwerksgehäuse 14 angeordnet, das den Nebenstromkanal 2 begrenzt und den äußeren Umfangsbereich des Strahltriebwerkes 1 darstellt. Die Nebenaggregategetriebeeinrichtung 13 ist vorliegend über eine in radialer Richtung des Stahltriebwerks 1 verlaufende Antriebswelle 15 über ein inneres Getriebe 16A mit der Triebwerksachse 12 verbunden und wird somit von der Triebwerksachse 12 im Betrieb des Stahltriebwerkes 1 angetrieben bzw. mit Drehmoment versorgt. Von der Nebenaggregategetriebeeinrichtung 13 werden verschiedene Nebenaggregate 16 und eine Einrichtung 17 zum Abscheiden von Öl bzw. ein Ölabscheider, der auch als Breather bezeichnet wird, in gewünschtem Umfang mit Drehmoment beaufschlagt. Zusätzlich ist im Bereich der Nebenaggregategetriebeeinrichtung 13 auch ein Öltank 18 vorgesehen, der ein Hydraulikfluidreservoir darstellt, aus dem Öl zur Kühlung und Schmierung verschiedener Bereiche des Strahltriebwerks 1, wie Lagereinrichtungen, Zahnradpaarungen des inneren Getriebes 16A und der Nebenaggregategetriebeeinrichtung 13 sowie weiterer zu kühlender und zu schmierender Baugruppen des Strahltriebwerkes 1, entnommen wird.

Im Unterschied hierzu ist die Nebenaggregategetriebeeinrichtung 13 mit den Nebenaggregaten 16 und dem Ölabscheider 17 bei der Ausführung des Strahltriebwerks 1 gemäß Fig. 1b in radialer Richtung zwischen dem Nebenstromkanal 2 und dem Triebwerkskern 5 in einem sowohl den Nebenstromkanal 2 als auch den Triebwerkskern 5 begrenzenden Bauteil 19 angeordnet.

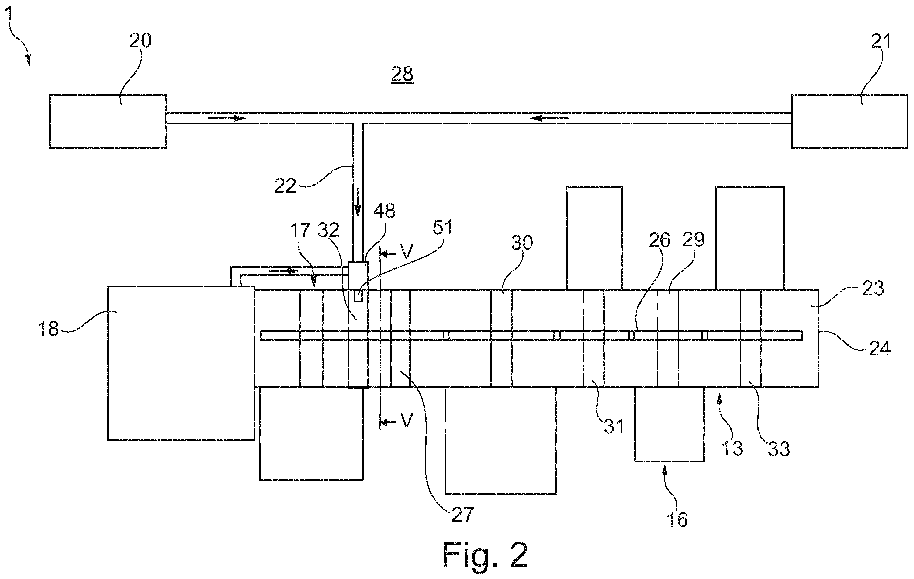

Fig. 2 bis Fig. 7 zeigen jeweils Bereiche des Strahltriebwerkes 1 gemäß Fig. 1a bzw. Fig. 1b, in dem die Nebenaggregategetriebeeinrichtung 13, die Nebenaggregate 16 und der Ölabscheider 17 angeordnet sind. Der Ölabscheider 17 steht in der nachfolgend näher beschriebenen Art und Weise mit dem Öltank 18 und mit zwei weiteren Bereichen 20, 21 des Strahltriebwerks 1 in Wirkverbindung, die als Lagerkammern des Strahltriebwerks 1 ausgeführt sind und im Betrieb des Strahltriebwerks 1 mit Öl aus dem Öltank 18 zum Schmieren und Kühlen beaufschlagt werden. Dabei stellt der Bereich 20 die Lagerkammer des vorderen Lagers und der Bereich 21 die Lagerkammer des hinteren Lagers des Strahltriebwerkes 1 dar.

Aus der vorderen Lagerkammer 20 und der hinteren Lagerkammer 21 ist jeweils ein Luft-Öl-Volumenstrom in Richtung eines Leitungsbereiches 22 führbar, der vorliegend in einen Innenraum 23 eines Gehäuses 24 der Nebenaggregategetriebeeinrichtung 13 mündet. Des Weiteren ist auch der Öltank 18 mit dem Innenraum 23 des Gehäuses 24 der Nebenaggregategetriebeeinrichtung 13 verbunden, um zusätzlich auch einen Luft-Öl-Volumenstrom aus dem Öltank 18 in den Innenraum 23 einleiten zu können.

Der Innenraum 23 des Gehäuses 24 der Nebenaggregategetriebeeinrichtung 13 ist wiederum über einen Einlassbereich 34 eines Abscheidegehäuses bzw. eines Gehäuses 46 des Ölabscheiders 17 mit einem Innenraum 42 des Ölabscheiders 17 verbunden, wobei bei einer entsprechenden Bedruckung des Innenraums 23 der Nebenaggregategetriebeeinrichtung 13 ein Luft-Öl-Volumenstrom aus dem Gehäuse 24 der Nebenaggregategetriebeeinrichtung 13 in den Innenraum 42 des Ölabscheiders 17 eingeleitet wird. Im Innenraum 42 des Ölabscheiders 17 ist ein mit dem Gehäuse 46 des Ölabscheiders 17 drehbarer poröser Bereich 25 angeordnet, der von dem aus dem Innenraum 23 des Gehäuses 24 der Nebenaggregategetriebeeinrichtung 13 in den Innenraum 42 des Ölabscheiders 17 einströmenden Luft-Öl-Volumenstrom beaufschlagbar und durchströmbar ist.

Der Ölabscheider 17 ist vorliegend mit einer Getriebewelle 26 der Nebenaggregategetriebeeinrichtung 13 wirkverbunden und von dieser rotatorisch antreibbar. Zusätzlich zum Ölabscheider 17 sind auf der Getriebewelle 26 Zahnräder 27 und 29 bis 33 angeordnet, über die zum Antreiben der Nebenaggregate 16 von der Getriebewelle 26 ein Drehmoment in Richtung der Nebenaggregate 16 weiterleitbar ist. Des Weiteren ist der Ölabscheider 17 neben einem als Gehäusedeckel ausgeführten Bauteil 40 des Gehäuses 24 vorgesehen, der über eine Dichteinrichtung 41 den Innenraum 23 der Nebenaggregategetriebeeinrichtung 13 gegenüber der Umgebung 28 abdichtet. Auf der dem Bauteil 40 abgewandten Seite des Ölabscheiders 17 ist das Zahnrad 32 der Nebenaggregategetriebeeinrichtung 13 vorgesehen.

Der ebenfalls von der Getriebewelle 26 in Rotation versetzbare poröse Bereich 25 des Ölabscheiders 17 wirkt als Zentrifuge, um den Anteil des Öls in dem durch den porösen Bereich 25 strömenden Luft-Öl-Volumenstrom soweit als möglich reduzieren zu können. Dabei wird der Ölanteil des Luft-Öl-Volumenstromes im Ölabscheider 17 im Bereich des porösen Bereiches 25 einerseits wie beim Durchströmen eines Prallfilters und andererseits wie im Bereich einer Zentrifuge aufgrund der Rotation des porösen Bereiches 25 durch Abscheiden des Öles aus der Luft reduziert. Das im Bereich des porösen Bereiches 25 abgeschleuderte Öl wird über einen Ölauslass 39 des Ölabscheiders 17, der in einem radial äußeren Bereich 38 des Gehäuses 46 des Ölabscheiders 17 vorgesehene Bohrungen umfasst, die den Innenraum 42 des Ölabscheiders 17 mit dem Innenraum 23 des Gehäuses 24 der Nebenaggregategetriebeeinrichtung 13 verbinden, in Richtung des Innenraums 23 der Nebenaggregategetriebeeinrichtung 13 abgeführt und von dort zurück in den Öltank 18 gepumpt.

Der gereinigte Luftstrom wird stromab des porösen Bereiches 25 über einen Umlenkbereich 35 des Ölabscheiders 17 umgelenkt und über durch die als Hohlwelle ausgebildete Getriebewelle 26 führenden Durchlassöffnungen 36, die den Luftauslass des Ölabscheiders 17 bilden, in einen Innenraum 37 der Getriebewelle 26 eingeleitet. Anschließend wird die Luft von dort in Richtung der Umgebung 28 abgeführt. Der aus dem Ölabscheider 17 in Richtung einer Umgebung 28 der Nebenaggregategetriebeeinrichtung 13 ausströmende Luftstrom weist nur eine geringe Beladung an Öl auf.

Dadurch, dass die Luft-Öl-Volumenströme der Lagerkammern 20 und 21 und des Öltanks 18 in den Innenraum 23 des Gehäuses 24 der Nebenaggregategetriebeeinrichtung 13 eingeleitet werden, ist die Beladung des in Richtung der Umgebung 28 aus dem Ölabscheider 17 abströmenden Luft-Öl-Volumenstromes mit Öl auf einfache Art und Weise gering. Dies resultiert aus der Tatsache, dass die Luft-Öl-Volumenströme aus den Lagerkammern 20 und 21 und aus dem Öltank 18 im Innenraum 23 der Nebenaggregategetriebeeinrichtung 13 aufgrund der stark ölhaltigen Umgebung innerhalb der Nebenaggregategetriebeeinrichtung 13 zunächst auf die Öltemperatur in der Nebenaggregategetriebeeinrichtung 13 abgekühlt werden. Die durch die Abkühlung der Luft-Öl-Volumenströme einsetzende Kondensation von in den Luft-Öl-Volumenströmen gasförmig gebundenem Öl führt zu einem Anstieg der Durchmesser der in den Luft-Öl-Volumenströmen vorhandenen Ölpartikel, die auf jeden Fall größer sind als Öltropfen, die aufgrund ihrer geringen Größe im porösen Bereich 25 nicht ausfilterbar sind.

Die Durchmesser der in den Luft-Öl-Volumenströmen aus den Lagerkammern 20 und 21 und aus dem Öltank 18 vorhandenen kleineren Tröpfchen steigen durch das Einleiten in den Innenraum 23 der Nebenaggregategetriebeeinrichtung 13 auch durch Vereinigung mit weiteren Öltröpfchen in der Luft im Innenraum 24 der Nebenaggregategetriebeeinrichtung 13 an, was durch die jeweils vorliegenden Anziehungskräfte zwischen den einzelnen Öltröpfchen in den Luft-Öl-Volumenströmen und der in der Luft im Innenraum der Nebenaggregategetriebeeinrichtung 13 vorhandenen Öltröpfchen begünstigt wird. Die durch die im Bereich des Innenraums 23 der Nebenaggregategetriebeeinrichtung 13 auftretende Auswaschung des Öls nunmehr vergrößerten Ölpartikel im gesamten Luft-Öl-Volumenstrom können von dem porösen Bereich 25 bzw. dem Metallschaum im Breather 17 wesentlich effizienter separiert werden, womit Ölverluste des Strahltriebwerks 1 durch verringerte Emissionen in Richtung der Umgebung 28 minimiert sind.

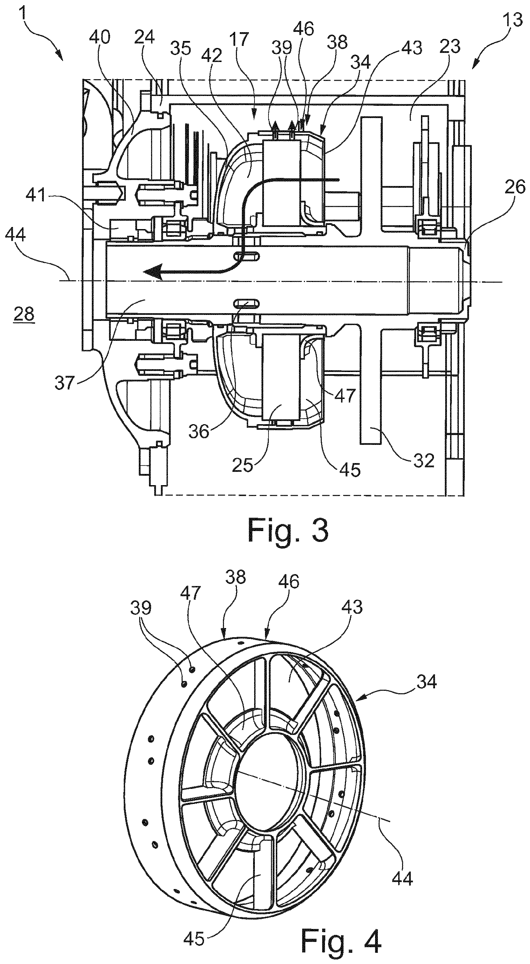

Zusätzlich sind im Einlassbereich 34 des Ölabscheiders 17 im Wesentlichen in radialer Richtung verlaufende und um eine senkrecht zu einer Querschnittsebene 43 des Einlassbereiches 34, die vorliegend senkrecht zur Zeichenebene steht, verlaufende Drehachse 44 drehbare Schaufeln 45 angeordnet, die in Fig. 4 näher gezeigt sind. Über die Schaufeln 45 wird ein in Bezug auf den Einlassbereich 34 stromab der Schaufeln 45 angeordneter Strömungsbereich im Innenraum 42 des Ölabscheiders 17 in rotierendem Zustand der Schaufeln 45 von den Schaufeln 45 bedruckt. Die Schaufeln 45 sind einenends in einem inneren Durchmesserbereich des Gehäuses 46 mit einem Nabenbereich 47 und anderenends in einem äußeren Durchmesserbereich des Gehäuses 46 mit dem Gehäuse 46 verbunden. Der Nabenbereich 47 des Gehäuses 46 ist mit dem äußeren Durchmesserbereich des Gehäuses 46 gemeinsam mit den Schaufeln 45 von der Getriebewelle 26 in Rotation versetzbar.

Das Gehäuse 46, die Schaufeln 45 und der Nabenbereich 47 bilden wenigstens annähernd ein Flügelrad aus, über das der aus dem Innenraum 23 der Nebenaggregategetriebeeinrichtung 13 in den Innenraum 42 des Ölabscheiders 17 geführte Luft-Öl-Volumenstrom zum wenigstens annähernden Ausgleich eines während der Durchströmung des porösen Bereiches 25 auftretenden Druckabfalles eingeblasen wird. Um die Bedruckung des Innenraums 42 durch die Schaufeln 45 in gewünschtem Umfang erreichen zu können, sind die Schaufeln 45 sowohl in radialer Richtung als auch in Strömungsrichtung des Luft-Öl-Volumenstromes mit einer hierfür günstigen Querschnittsgestaltung ausgeführt.

Aufgrund der Bedruckung der Nebenaggregategetriebeeinrichtung 13 besteht auf einfache Art und Weise die Möglichkeit, im Bereich der Nebenaggregategetriebeeinrichtung 13 und des Ölabscheiders 17 druckabhängige Dichtungen, z. B. Lippendichtungen oder dergleichen, zu verwenden. Zusätzlich ist das Strahltriebwerk 1 durch die Einleitung der Luft-Öl-Volumenströme aus den Lagerkammern 20 und 21 und aus dem Öltank 18 in den Innenraum 23 der Nebenaggregategetriebeeinrichtung 13 im Bereich von Luftzuleitungen mit geringeren Leitungslängen ausführbar. Die Ölabscheidung im Bereich der Vorrichtung 17 wird neben der optimierten Ölabscheidung im Bereich des Ölabscheiders 17 durch die Vorkühlung der Luft im Bereich der Nebenaggregategetriebeeinrichtung 13 mit geringem konstruktivem Aufwand weiter verbessert.

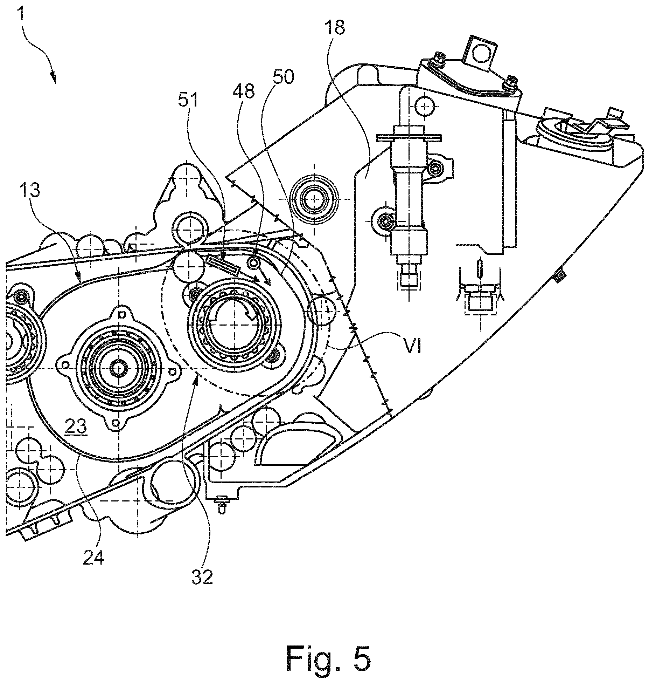

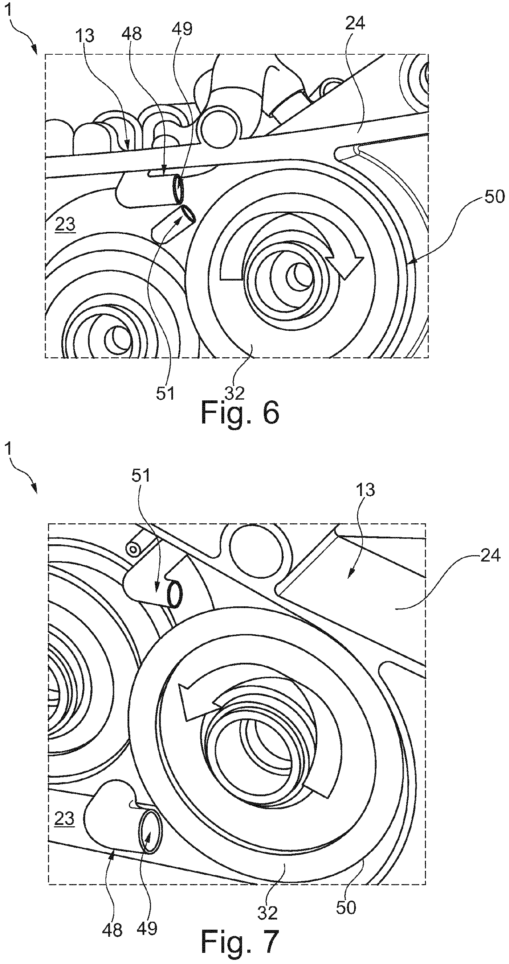

Fig. 5 zeigt eine Querschnittansicht durch die Nebenaggregategetriebeeinrichtung 13 entlang einer in Fig. 2 näher gezeigten Schnittlinie V-V. Aus der Darstellung gemäß Fig. 5 geht hervor, dass sowohl der Luft-Öl-Volumenstrom aus den Lagerkammern 20 und 21 sowie der Luft-Öl-Volumenstrom aus dem Öltank 18 über eine Einleiteinrichtung 48 wenigstens annähernd tangential zu einem zumindest zu einem äußeren Umfangsbereich nahen Bereich des Zahnrades 32 in das Gehäuse 24 der Nebenaggregategetriebeeinrichtung eingeleitet werden. Dabei wird dem Luft-Öl-Volumenstrom im Bereich der Einleiteinrichtung 48 eine im Wesentlichen der Drehbewegung des drehbaren Bauteils bzw. des Zahnrades 32 wenigstens annähernd entsprechende Strömungsrichtung aufgeprägt. Die Einleiteinrichtung 48 umfasst einen in Fig. 6 bzw. Fig. 7 näher gezeigten rohrförmigen Auslass 49, aus dem der Luft-Öl-Volumenstrom tangential zu dem vorliegend als Stirnrad ausgeführten Zahnrad 32 ausströmt.

Im Bereich des im Betrieb der Nebenaggregategetriebeeinrichtung 13 schnell drehenden Zahnrades 32 wird der in das Gehäuse 23 der Nebenaggregategetriebeeinrichtung 13 eingeleitete Luft-Öl-Volumenstrom beschleunigt und strömt eine Innenwand 50 des Gehäuses 23 an. Durch die über das Zahnrad 32 erzwungene Anströmung der Innenwand 50 werden im Luft-Öl-Volumenstrom vorhandene Öltröpfchen mit Tröpfchendurchmessern in größerem Umfang an der Innenwand 50 des Gehäuses 23 der Nebenaggregategetriebeeinrichtung abgeschieden, die sich aufgrund ihrer geringen Tröpfchengröße ohne die erzwungene Anströmung nur in geringem Umfang an der Innenwand 50 des Gehäuses 23 der Nebenaggregategetriebeeinrichtung 13 abscheiden.

Um den durch die erzwungene Anströmung verbesserten Abscheideprozess von im Luft-Öl-Volumenstrom vorhandenen Öltröpfchen mit kleinen Tröpchendurchmessern zu verbessern, ist die Vorrichtung 13 zusätzlich im Bereich des Zahnrades 32 mit einer Einrichtung 51 zum Einsprühen von Öl in den aus der Einleiteinrichtung 48 in den Innenraum 24 der Nebenaggregategetriebeeinrichtung 13 einströmenden Luft-Öl-Volumenstrom ausgeführt. Dabei wird das Öl mit derartigen Tröpfchendurchmessern in den Luft-Öl-Volumenstrom eingesprüht, dass sich die kleinen Tröpfchen im Luft-Öl-Volumenstrom mit den eingesprühten Öltröpfchen zu größeren Öltröpfchen vereinen. Diese größeren Öltröpfchen scheiden sich wiederum in größerem Umfang an der Innenwand 50 ab. Zusätzlich sind die größeren Öltröpfchen im Bereich des Ölabscheiders 17 besser aus dem aus der Nebenaggregategetriebeeinrichtung 13 auszuführenden Luft-Öl-Volumenstrom abscheidbar.

Bei dem in Fig. 6 gezeigten ersten Ausführungsbeispiel der Vorrichtung 13 bzw. der Nebenaggregategetriebeeinrichtung wird dem Luft-Öl-Volumenstrom im Bereich der Einleiteinrichtung 48 eine im Wesentlichen der Drehbewegung des Zahnrades 32 wenigstens annähernd entsprechende Strömungsrichtung aufgeprägt, während dem aus der Einrichtung 51 in den Luft-Öl-Volumenstrom einsprühbaren Öl im Bereich der Einrichtung 51 eine Strömungsrichtung aufgeprägt wird, die mit der Hauptströmungsrichtung des Luft-Öl-Volumenstromes im Bereich des drehbaren Bauteiles einen spitzen Winkel einschließt, womit das Öl ebenfalls eine im Wesentlichen der Drehbewegung des Zahnrades 32 wenigstens annähernd entsprechende Strömungsrichtung aufweist. Das Öl wird in Einbaulage der Nebenaggregategetriebeeinrichtung 13 unterhalb des Luft-Öl-Volumenstromes in den Luft-Öl-Volumenstrom eingesprüht, bevor der Luft-Öl-Volumenstrom gemeinsam mit dem eingesprühten Öl vollumfänglich vom rotierenden Zahnrad 32 erfasst und beschleunigt sowie vermischt wird.

Im Unterschied hierzu wird das Öl bei der in Fig. 7 gezeigten zweiten Ausführungsform der Vorrichtung 13 entgegen der Drehrichtung des Zahnrades 32 wenigstens annähernd tangential zum äußeren Umfang des Zahnrades 32 in den Innenraum 23 der Nebenaggregategetriebeeinrichtung 13 eingesprüht und vom Zahnrad 32 in Drehrichtung des Zahnrades 32 beschleunigt und mit dem in Strömungsrichtung des Zahnrades 32 tangential zum Zahnrad 32 eingeleiteten Luft-Öl-Volumenstrom in gewünschtem Umfang vermischt und strömt anschließend in vorbeschriebenem Umfang die Innenwand 50 des Gehäuses 23 der Nebenaggregategetriebeeinrichtung 13 an.

In Abhängigkeit des jeweils vorliegenden Anwendungsfalles, insbesondere in Abhängigkeit des jeweils zur Verfügung stehenden Bauraumes im Gehäuse 24 der Nebenaggregategetriebeeinrichtung 13 bzw. der Vorrichtung wird der Luft-Öl-Volumenstrom im Wesentlichen in Drehrichtung des Zahnrades 32, entgegen der Drehrichtung des Zahnrades 32 oder mit einer dazwischen liegenden Anströmungsrichtung in den Innenraum 23 des Gehäuses 24 der Nebenaggregategetriebeeinrichtung 13 wenigstens annähernd tangential zu einem äußeren Umfangsbereich nahen Bereich des drehbaren Bauteils 32 in das Gehäuse 24 eingeleitet. Um eine Abscheideleistung im Bereich einer Gehäuseinnenwand 50 des Gehäuses 23 entsprechend zu verbessern, wird dem Öl im Bereich der Einrichtung 51 eine Strömungsrichtung aufgeprägt, die mit der Hauptströmungsrichtung des Luft-Öl-Volumenstromes vorzugsweise im Bereich des drehbaren Bauteils 32 einen spitzen Winkel und/oder einen stumpfen Winkel einschließt.

Wird die nach der Abscheidung von Öltröpfchen im Bereich der Gehäuseinnenwand 50 mit entsprechend größeren Öltröpfchen beladene Luft aus dem Innenraum 23 des Gehäuses 24 der Nebenaggregategetriebeeinrichtung 13 in den Ölabscheider 17 eingeleitet, sind die verbleibenden und nunmehr größeren Ölpartikel im Bereich des Ölabscheiders 17 effizienter aus dem Luft-Öl-Volumenstrom separierbar.

Grundsätzlich führt der im Vergleich zu herkömmlich ausgebildeten Strahltriebwerken geringere Ölverbrauch des Strahltriebwerkes 1 dazu, dass Wartungsintervalle eines Strahltriebwerkes verlängerbar sind, Emissionen eines Strahltriebwerkes geringer sind und weniger sichtbarer Ölnebel verursacht wird.

### Bezugszeichenliste

- 1: Strahltriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9, 10, 11: Rotorvorrichtung
- 12: Triebwerksachse
- 13: Nebenaggregategetriebeeinrichtung
- 14: Triebwerksgehäuse
- 15: Antriebswelle
- 16: Nebenaggregate
- 16A: inneres Getriebe
- 17: Einrichtung, Ölabscheider
- 18: Öltank
- 19: Bauteil
- 20: Bereich, vordere Lagerkammer
- 21: Bereich, hintere Lagerkammer
- 22: Leitungsbereich
- 23: Innenraum
- 24: Gehäuse
- 25: poröser Bereich
- 26: Getriebewelle, Hohlwelle
- 27: Zahnrad
- 28: Umgebung
- 29 bis 33: Zahnrad
- 34: Einlassbereich des Ölabscheiders
- 35: Umlenkbereich des Ölabscheiders
- 36: Durchlassöffnung der Getriebewelle, Luftauslass des Ölabscheiders
- 37: Innenraum der Getriebewelle
- 38: radial äußerer Bereich des Ölabscheiders
- 39: Bohrung, Ölauslass des Ölabscheiders
- 40: Bauteil
- 41: Dichteinrichtung
- 42: Innenraum des Ölabscheiders
- 43: Querschnittsebene
- 44: Drehachse
- 45: Schaufeln
- 46: Gehäuse des Ölabscheiders
- 47: Nabenbereich des Ölabscheiders
- 48: Einleiteinrichtung
- 49: rohrförmiger Auslass
- 50: Innenwand des Gehäuses der Nebenaggregategetriebeeinrichtung
- 51: Einrichtung zum Einsprühen von Öl

## Patentansprüche

1. Vorrichtung (13) eines Strahltriebwerks (1) mit wenigstens einem in einem Gehäuse (24) angeordneten und gegenüber dem Gehäuse (24) drehbar ausgeführten Bauteil (32), wobei wenigstens ein Luft-Öl-Volumenstrom aus einem Bereich des Strahltriebwerks (1) in das Gehäuse (24) führbar ist, **dadurch gekennzeichnet, dass** der Luft-Öl-Volumenstrom über eine Einleiteinrichtung (48) wenigstens annähernd tangential zu einem zumindest zu einem äußeren Umfangsbereich nahen Bereich des drehbaren Bauteils (32) in das Gehäuse (24) einleitbar ist, wobei zumindest im Bereich des drehbaren Bauteils (32) über eine Einrichtung Öl in den Luft-Öl-Volumenstrom einsprühbar ist.

2. Vorrichtung nach Anspruch 1, **dadurch gekennzeichnet, dass** dem Luft-Öl-Volumenstrom im Bereich der Einleiteinrichtung eine im Wesentlichen der Drehbewegung des drehbaren Bauteils wenigstens annähernd entsprechende Strömungsrichtung aufprägbar ist.

3. Vorrichtung nach einem der Ansprüche 1 oder 2, **dadurch gekennzeichnet, dass** dem Luft-Öl-Volumenstrom im Bereich der Einleiteinrichtung (48) eine im Wesentlichen der Drehbewegung des drehbaren Bauteils (32) wenigstens annähernd entgegengesetzte Strömungsrichtung aufprägbar ist.

4. Vorrichtung nach einem der Ansprüche 1 bis 3, **dadurch gekennzeichnet, dass** dem aus der Einrichtung (51) in den Luft-Öl-Volumenstrom einsprühbaren Öl im Bereich der Einrichtung (51) eine Strömungsrichtung aufprägbar ist, die mit der Hauptströmungsrichtung des Luft-Öl-Volumenstromes vorzugsweise im Bereich des drehbaren Bauteils (32) einen spitzen Winkel einschließt.

5. Vorrichtung nach einem der Ansprüche 1 bis 4, **dadurch gekennzeichnet, dass** dem aus der Einrichtung (51) in den Luft-Öl-Volumenstrom einsprühbaren Öl im Bereich der Einrichtung (51) eine Strömungsrichtung aufprägbar ist, die mit der Hauptströmungsrichtung des Luft-Öl-Volumenstromes vorzugsweise im Bereich des drehbaren Bauteiles (32) einen stumpfen Winkel einschließt.

6. Vorrichtung nach einem der Ansprüche 1 bis 5, **dadurch gekennzeichnet, dass** die Einrichtung zum Einsprühen von Öl mit einer Düseneinrichtung ausgebildet ist, in deren Bereich das in den Luft-Öl-Volumenstrom einzusprühende Öl vorzugsweise vernebelbar ist.

7. Vorrichtung nach einem der Ansprüche 1 bis 6, **dadurch gekennzeichnet, dass** eine Einrichtung (17) zum Abscheiden von Öl aus einem aus dem Gehäuse (24) auszuführenden Luft-Öl-Volumenstrom mit einem Abscheidergehäuse (46) vorgesehen ist, die mit einem Einlassbereich (34) für den Luft-Öl-Volumenstrom, mit einem Auslassbereich (36) für Luft und mit einem Auslassbereich (39) für das aus dem Luft-Öl-Volumenstrom abgeschiedene Öl ausgebildet ist.

8. Vorrichtung nach Anspruch 7, **dadurch gekennzeichnet, dass** im Einlassbereich (34) im Wesentlichen in radialer Richtung verlaufende und um eine senkrecht zu einer Querschnittsebene (43) des Einlassbereiches (34) stehende Drehachse (44) drehbare Schaufeln (45) angeordnet sind, die einen in Bezug auf den Einlassbereich (34) stromab der Schaufeln (45) angeordneten Bereich im Inneren (42) des Abscheidergehäuses (46) in rotierendem Zustand bedrucken.

9. Vorrichtung nach Anspruch 8, **dadurch gekennzeichnet, dass** die Schaufeln (45) wenigstens annähernd ein Flügelrad ausbilden.

10. Vorrichtung nach Anspruch 8 oder 9, **dadurch gekennzeichnet, dass** die Schaufeln (45) einenends in einem inneren Durchmesserbereich des Abscheidergehäuses (46) mit einem Nabenbereich (47) und anderenends in einem äußeren Durchmesserbereich des Flügelrades mit dem Abscheidergehäuse (46) verbunden sind, wobei sowohl der Nabenbereich (47) als auch das Gehäuse (46) gemeinsam mit den Schaufeln (45) in Rotation versetzbar sind.

11. Vorrichtung nach einem der Ansprüche 7 bis 10, **dadurch gekennzeichnet, dass** der Auslassbereich (39) für aus dem Luft-Öl-Volumenstrom abgeschiedenes Öl in einem radial äußeren Bereich (38) des Abscheidergehäuses (46) vorgesehene Bohrungen aufweist.

12. Vorrichtung nach einem der Ansprüche 7 bis 11, **dadurch gekennzeichnet, dass** die Einrichtung (17) zum Abscheiden von Öl auf einer Welle (26) angeordnet ist.

13. Vorrichtung nach Anspruch 12, **dadurch gekennzeichnet, dass** der Auslassbereich (36) der Einrichtung (17) zum Abscheiden von Öl wenigstens eine durch die als Hohlwelle ausgebildete Welle (26) führende Durchlassöffnung umfasst.

14. Vorrichtung nach einem der Ansprüche 11 bis 13, **dadurch gekennzeichnet, dass** die Bohrungen des Auslassbereiches (39) für das aus dem Luft-Öl-Volumenstrom abgeschiedene Öl einen Innenraum (42) der Einrichtung (17) zum Abscheiden von Öl mit einem Innenraum (23) des Gehäuses (24) verbinden.

## Claims

1. Apparatus (13) of a jet engine (1) having at least one component (32) which is arranged in a housing (24) and configured to be rotatable with respect to the housing (24), wherein at least one air-oil volumetric flow can be guided out of a region of the jet engine (1) into the housing (24), **characterized in that** the air-oil volumetric flow can be introduced into the housing (24) via an introduction device (48) at least approximately tangentially to a region of the rotatable component (32) that is close at least to an outer circumferential region, wherein, at least in the region of the rotatable component (32), oil can be sprayed into the air-oil volumetric flow via a device.

2. Apparatus according to Claim 1, **characterized in that** a flow direction which corresponds at least approximately substantially to the rotational movement of the rotatable component can be imposed on the air-oil volumetric flow in the region of the introduction device.

3. Apparatus according to either of Claims 1 and 2, **characterized in that** a flow direction which is at least approximately opposite substantially to the rotational movement of the rotatable component (32) can be imposed on the air-oil volumetric flow in the region of the introduction device (48).

4. Apparatus according to one of Claims 1 to 3, **characterized in that** a flow direction can be imposed in the region of the device (51) on the oil which can be sprayed from the device (51) into the air-oil volumetric flow, said flow direction enclosing an acute angle with the main flow direction of the air-oil volumetric flow, preferably in the region of the rotatable component (32).

5. Apparatus according to one of Claims 1 to 4, **characterized in that** a flow direction can be imposed in the region of the device (51) on the oil which can be sprayed from the device (51) into the air-oil volumetric flow, said flow direction enclosing an obtuse angle with the main flow direction of the air-oil volumetric flow, preferably in the region of the rotatable component (32).

6. Apparatus according to one of Claims 1 to 5, **characterized in that** the device for spraying oil is formed with a nozzle device in the region of which the oil to be sprayed into the air-oil volumetric flow can preferably be atomized.

7. Apparatus according to one of Claims 1 to 6, **characterized in that** a device (17) for separating oil from an air-oil volumetric flow to be guided out of the housing (24) and having a separator housing (46) is provided, which is formed with an inlet region (34) for the air-oil volumetric flow, with an outlet region (36) for air and with an outlet region (39) for the oil separated from the air-oil volumetric flow.

8. Apparatus according to Claim 7, **characterized in that** blades (45) which extend substantially in a radial direction and can be rotated about an axis of rotation (44) perpendicular to a cross-sectional plane (43) of the inlet region (34) are arranged in the inlet region (34) and, in the rotating state, pressurize a region in the interior (42) of the separator housing (46) that is arranged downstream of the blades (45) with respect to the inlet region (34).

9. Apparatus according to Claim 8, **characterized in that** the blades (45) at least approximately form an impeller.

10. Apparatus according to Claim 8 or 9, **characterized in that** the blades (45) are connected at one end to a hub region (47) in an inner diameter region of the separator housing (46) and at the other end to the separator housing (46) in an outer diameter region of the impeller, wherein both the hub region (47) and the housing (46) can be set in rotation together with the blades (45).

11. Apparatus according to one of Claims 7 to 10, **characterized in that** the outlet region (39) for oil separated from the air-oil volumetric flow has bores which are provided in a radially outer region (38) of the separator housing (46).

12. Apparatus according to one of Claims 7 to 11, **characterized in that** the device (17) for separating oil is arranged on a shaft (26).

13. Apparatus according to Claim 12, **characterized in that** the outlet region (36) of the device (17) for separating oil comprises at least one through-opening leading through the shaft (26), which is designed as a hollow shaft.

14. Apparatus according to one of Claims 11 to 13, **characterized in that** the bores of the outlet region (39) for the oil separated from the air-oil volumetric flow connect an interior (42) of the device (17) for separating oil to an interior (23) of the housing (24).

## Revendications

1. Dispositif (13) d'un moteur à réaction (1) comprenant au moins un composant (32) disposé dans un boîtier (24) et réalisé de manière à pouvoir tourner par rapport au boîtier (24), au moins un débit volumique d'air et d'huile provenant d'une région du moteur à réaction (1) pouvant être conduit dans le boîtier (24), **caractérisé en ce que** le débit volumique d'air et d'huile peut être introduit à l'intérieur du boîtier (24) par le biais d'un dispositif d'introduction (48) au moins approximativement tangentiellement à une région du composant rotatif (32) proche au moins d'une région périphérique extérieure, au moins dans la région du composant rotatif (32), de l'huile pouvant être pulvérisée par le biais d'un dispositif à l'intérieur du débit volumique d'air et d'huile.

2. Dispositif selon la revendication 1, **caractérisé en ce qu'**une direction d'écoulement correspondant au moins approximativement sensiblement au mouvement de rotation du composant rotatif peut être imprimée au débit volumique d'air et d'huile dans la région du dispositif d'introduction.

3. Dispositif selon l'une quelconque des revendications 1 et 2, **caractérisé en ce qu'**une direction d'écoulement au moins approximativement opposée sensiblement au mouvement de rotation du composant rotatif (32) peut être imposée au débit volumique d'air et d'huile dans la région du dispositif d'introduction (48).

4. Dispositif selon l'une quelconque des revendications 1 à 3, **caractérisé en ce qu'**une direction d'écoulement peut être imposée dans la région du dispositif (51) à l'huile pouvant être pulvérisée depuis le dispositif (51) dans le débit volumique d'air et d'huile, cette direction formant un angle aigu avec la direction d'écoulement principal du débit volumique d'air et d'huile de préférence dans la région du composant rotatif (32).

5. Dispositif selon l'une quelconque des revendications 1 à 4, **caractérisé en ce qu'**une direction d'écoulement peut être imposée dans la région du dispositif (51) à l'huile pouvant être pulvérisée depuis le dispositif (51) dans le débit volumique d'air et d'huile, cette direction formant un angle obtus avec la direction d'écoulement principal du débit volumique d'air et d'huile de préférence dans la région du composant rotatif (32).

6. Dispositif selon l'une quelconque des revendications 1 à 5, **caractérisé en ce que** le dispositif de pulvérisation d'huile est réalisé avec un dispositif de buse dans la région duquel l'huile devant être pulvérisée dans le débit volumique d'air et d'huile peut de préférence être atomisée.

7. Dispositif selon l'une quelconque des revendications 1 à 6, **caractérisé en ce qu'**un dispositif (17) pour séparer l'huile d'un débit volumique d'air et d'huile devant être guidé hors du boîtier (24) est prévu avec un boîtier de séparateur (46), lequel dispositif est réalisé avec une région d'entrée (34) pour le débit volumique d'air et d'huile, avec une région de sortie (36) pour l'air et avec une région de sortie (39) pour l'huile séparée du débit volumique d'air et d'huile.

8. Dispositif selon la revendication 7, **caractérisé en ce que** des pales (45) s'étendant essentiellement dans la direction radiale et pouvant tourner autour d'un axe de rotation (44) perpendiculaire à un plan en section transversale (43) de la région d'entrée (34) sont disposées dans la région d'entrée (34), lesquelles, dans l'état rotatif, sollicitent une région à l'intérieur (42) du boîtier de séparateur (46), disposée en aval des pales (45) par rapport à la région d'entrée (34).

9. Dispositif selon la revendication 8, **caractérisé en ce que** les pales (45) constituent au moins approximativement une roue mobile.

10. Dispositif selon la revendication 8 ou 9, **caractérisé en ce que** les pales (45) sont connectées à une extrémité, dans une région de diamètre intérieur du boîtier de séparateur (46), à une région de moyeu (47), et à l'autre extrémité, dans une région de diamètre extérieur de la roue mobile, au boîtier de séparateur (46), la région de moyeu (47) ainsi que le boîtier (46) pouvant être mis en rotation conjointement avec les pales (45).

11. Dispositif selon l'une quelconque des revendications 7 à 10, **caractérisé en ce que** la région de sortie (39) pour l'huile séparée du débit volumique d'air et d'huile présente des alésages prévus dans une région radialement extérieure (38) du boîtier de séparateur (46).

12. Dispositif selon l'une quelconque des revendications 7 à 11, **caractérisé en ce que** le dispositif (17) pour séparer l'huile est disposé sur un arbre (26).

13. Dispositif selon la revendication 12, **caractérisé en ce que** la région de sortie (36) du dispositif (17) pour séparer l'huile comprend au moins une ouverture de passage conduisant à travers l'arbre (26) réalisé sous forme d'arbre creux.

14. Dispositif selon l'une quelconque des revendications 11 à 13, **caractérisé en ce que** les alésages de la région de sortie (39) pour l'huile séparée du débit volumique d'air et d'huile relient un espace intérieur (42) du dispositif (17) pour séparer l'huile à un espace intérieur (23) du boîtier (24).
